# EUROPEAN PATENT SPECIFICATION

(11) **EP 4 374 436 B1**
(45) Date of publication and mention of the grant of the patent: **10.12.2025**
(21) Application number: 22747397.2
(22) Date of filing: 20.07.2022
(51) Int. Cl.: H01M 4/86, B01J 23/46, B01J 23/64, B01J 35/30, B01J 35/61, B01J 37/00, C25B 9/23, B01J 23/648, C25B 1/04, C25B 11/093, H01M 4/88, H01M 4/90, H01M 4/92, B01J 37/08

(54) **OXYGEN EVOLUTION REACTION CATALYST**
KATALYSATOR FÜR SAUERSTOFFENTWICKLUNGSREAKTION
CATALYSEUR DE RÉACTION DE DÉGAGEMENT D'OXYGÈNE

(30) Priority: 21.07.2021 GB 202110475
(43) Date of publication of application: 29.05.2024
(73) Proprietor: Johnson Matthey Hydrogen Technologies Limited, London EC2V 7AD (GB)
(72) Inventor: BLAKE, John, Swindon Wiltshire SN5 8AT (GB); BURTON, Sarah, Swindon Wiltshire SN5 8AT (GB); RALPH, Thomas Robertson, Swindon Wiltshire SN5 8AT (GB)
(74) Representative: Johnson Matthey Plc
(86) International application number: PCT/GB2022/051878
(87) International publication number: WO 2023/002183

(56) References cited:
- EP-A1- 2 475 034
- WO-A1-2005/049199
- WO-A1-2016/038349
- MAYOUSSE E ET AL: "Synthesis and characterization of electrocatalysts for the oxygen evolution in PEM water electrolysis", INTERNATIONAL JOURNAL OF HYDROGEN ENERGY, ELSEVIER, AMSTERDAM, NL, vol. 36, no. 17, 23 May 2011 (2011-05-23), pages 10474 - 10481, XP028259005, ISSN: 0360-3199, [retrieved on 20110531], DOI: 10.1016/J.IJHYDENE.2011.05.139
- GUZMÁN DANNY ET AL: "Mechanochemical processing of IrO2-Ta2O5: An alternative route for synthesizing Ir and Ir(Ta)O2 solid solution", vol. 60, no. 2, 17 February 2020 (2020-02-17), ES, pages 109 - 118, XP055905517, ISSN: 0366-3175, Retrieved from the Internet <URL:https://www.sciencedirect.com/science/article/pii/S0366317520300182/pdfft?md5=45951c37a182f963adde980e3d83493d&pid=1-s2.0-S0366317520300182-main.pdf> [retrieved on 20200217], DOI: 10.1016/j.bsecv.2020.01.010

## Description

### Field of the Invention

The present invention relates to an oxygen evolution reaction catalyst and particularly, although not exclusively, to a high surface area catalyst material suitable for use in an electrochemical fuel cell.

### Background

A fuel cell is an electrochemical cell comprising two electrodes separated by an electrolyte. A fuel, e.g. hydrogen, an alcohol such as methanol or ethanol, or formic acid, is supplied to the anode and an oxidant, e.g. oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

Fuel cells are usually classified according to the nature of the electrolyte employed. Often the electrolyte is a solid polymeric membrane, in which the membrane is electronically insulating but ionically conducting. In the proton exchange membrane fuel cell the membrane is proton conducting, and protons, produced at the anode, are transported across the membrane to the cathode, where they combine with oxygen to form water.

A principal component of the proton exchange membrane fuel cell is the membrane electrode assembly, which is essentially composed of five layers. The central layer is the polymer ion-conducting membrane. On either side of the ion-conducting membrane there is an electrocatalyst layer, containing an electrocatalyst designed for the specific electrochemical reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore, the gas diffusion layer must be porous and electrically conducting. The membrane electrode assembly can be constructed by several methods. The electrocatalyst layer may be applied to the gas diffusion layer to form a gas diffusion electrode. Two gas diffusion electrodes can be placed either side of an ion-conducting membrane and laminated together to form the five-layer membrane electrode assembly. Alternatively, the electrocatalyst layer may be applied to both faces of the ion-conducting membrane to form a catalyst coated ion-conducting membrane. Subsequently, gas diffusion layers are applied to both faces of the catalyst coated ion-conducting membrane. Finally, a membrane electrode assembly can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of membrane electrode assemblies are required to provide enough power for most applications, so multiple membrane electrode assemblies are assembled to make up a fuel cell stack. Flow field plates are used to separate the membrane electrode assemblies. The plates perform several functions: supplying the reactants to the membrane electrode assemblies, removing products, providing electrical connections and providing physical support.

It is known that there are a number of situations where incorporating a water electrolysis catalyst into a fuel cell at either the anode or the cathode can prove beneficial. For example, WO01/15247 describes how incorporating an additional or second catalyst composition at the anode for purposes of electrolysing water can improve tolerance of a fuel cell to cell voltage reversal. Cell voltage reversal can occur if a cell receives an inadequate supply of fuel (for example, as a result of blockage of fuel access to a part of that cell). If this occurs, reactions other than fuel oxidation may take place at the fuel cell anode, because the potential on the anode is raised to high values, including water electrolysis and oxidation of anode structural components. Oxidation of anode structural components is undesirable as this can result in significant degradation of the anode. By incorporating a catalyst composition at the anode which promotes the oxygen evolution reaction, degradation of the anode can be reduced or avoided, by promotion of water electrolysis over anode structural component oxidation.

Another example of a situation in which promotion of water electrolysis may be beneficial is for fuel cells where it is not practical or economic to provide purging of hydrogen from the anode gas space with an inert gas such as nitrogen during shut down, or when a cell is re-started after being idle for some time. Both of these situations can result in a mixed composition of hydrogen and air on the anode whilst air is present on the cathode. Under these circumstances an internal cell can exist, as described by Tang et al (Journal of Power Sources 158 (2006) 1306-1312), which leads to high potentials on the cathode. The high potentials can cause carbon to oxidise which is highly damaging to the structure of the catalyst layer where the catalyst layer contains carbon. If the cathode layer is able to support oxygen evolution however, the high potentials can be used to drive water electrolysis rather than carbon corrosion.

Finally, in regenerative fuel cells, the electrodes are bi-functional and both anode and cathode must support two electrochemical reaction types at different times. When operating as a fuel cell the cathode must reduce oxygen and the anode oxidise hydrogen; when operating as an electrolyser the cathode must evolve hydrogen and the anode evolve oxygen. It may therefore be beneficial to incorporate both a traditional hydrogen oxidation reaction catalyst and an oxygen evolution reaction catalyst in the anode of such a fuel cell, because with such an arrangement, the anode can carry out both the hydrogen oxidation and oxygen evolution reactions effectively.

Various electrocatalysts for the oxygen evolution reaction are known in the art. For example, WO2005/049199 discloses a catalyst for water electrolysis. For example, WO11/021034 discloses catalyst layers comprising an electrocatalyst and an oxygen evolution reaction catalyst, wherein the oxygen evolution reaction catalyst comprises iridium or iridium oxide and one or more metals M or an oxide thereof, wherein M is selected from the group consisting of transition metals and Sn, with the exception of ruthenium. EP2475034 describes a catalyst layer comprising an iridium oxide component in combination with at least one other inorganic oxide component. WO2016/038349 describes a process for preparing a catalyst comprising iridium oxide and a metal oxide by flame spray pyrolysis. However, the provision of improved oxygen evolution reaction catalysts is desirable, and particularly the provision of catalysts which can improve the stability of membrane electrode assemblies during repeated reversal events.

The present invention has been devised in light of the above considerations.

### Summary of the Invention

In a first aspect, the present invention provides an oxygen evolution reaction catalyst, wherein the oxygen evolution reaction catalyst is an oxide material comprising iridium and tantalum;
wherein the oxygen evolution catalyst comprises a crystalline oxide phase having the rutile crystal structure;
wherein the crystalline oxide phase has a lattice parameter a of greater than 4.510 Å; and
wherein the oxygen evolution reaction catalyst has a BET surface area of at least 50 m²/g.

BET surface area may be at least 55 m²/g, preferably at least 60 m²/g, more preferably at least 70 m²/g. The upper limit of surface area is not particularly limited, an example being 200 m²/g. The present inventors have found that provision of a higher surface area material gives improved activity in, and improves the stability of, in particular fuel cell membrane electrode assemblies containing the oxygen evolution reaction catalyst in a catalyst layer during repeated reversal events. The BET surface area can be determined based on the N₂ adsorption isotherm at 77K, according to ISO standard 9277:2010(en).

Moreover, the oxygen evolution reaction catalyst comprises:
iridium present in an amount in the range of and including 60 to 95 atomic % based on the total atomic composition of iridium and tantalum species in the oxygen evolution reaction catalyst; and
tantalum present in an amount in the range of and including 5 to 40 atomic % based on the total atomic composition of iridium and tantalum species in the oxygen evolution reaction catalyst.

The amount of iridium and tantalum is determined by the molar amount of iridium and tantalum included in preparation of the material and can be confirmed using inductively coupled plasma mass spectrometry (ICPMS).

Iridium may suitably be present in an amount of at least 65 atomic %, preferably at least 70 atomic %, more preferably at least 75 atomic % based on the total atomic composition of iridium and tantalum species in the oxygen evolution reaction catalyst. Iridium may suitably be present in an amount of at most 85 atomic % based on the total atomic composition of iridium and tantalum species in the oxygen evolution reaction catalyst. In a preferred composition, iridium is present in an amount in the range of and including 70 to 85 atomic % based on the total atomic composition of iridium and tantalum species in the oxygen evolution reaction catalyst. In a more preferred composition, iridium is present in an amount in the range of and including 75 to 85 atomic % based on the total atomic composition of iridium and tantalum species in the oxygen evolution reaction catalyst.

Tantalum may suitably be present in an amount of at least 15 atomic %, based on the total atomic composition of iridium and tantalum species in the oxygen evolution reaction catalyst. Tantalum may suitably be present in an amount of at most 35 atomic %, preferably at most 30 atomic %, more preferably at most 25 atomic % based on the total atomic composition of iridium and tantalum species in the oxygen evolution reaction catalyst. In a preferred composition, tantalum is present in an amount in the range of and including 15 to 30 atomic % based on the total atomic composition of iridium and tantalum species in the oxygen evolution reaction catalyst, more preferably 15 to 25 atomic %.

The oxygen evolution reaction catalyst may optionally comprise metal species other than iridium and tantalum, for example in an amount up to and including 5 atomic % based on the total atomic composition of metal species in the oxygen evolution reaction catalyst, suitably up to and including 1 atomic % based on the total atomic composition of metal species in the oxygen evolution reaction catalyst. Preferably, iridium and tantalum constitute substantially all of the metal species present in the oxygen evolution reaction catalyst. Put another way, the metal species in the oxygen evolution reaction catalyst consist essentially of, preferably consist of, iridium and tantalum. The atomic ratio of total iridium and tantalum to oxygen is typically about 1:2. The oxygen evolution reaction catalyst may optionally comprise metal species in the metallic form, for example in an amount up to and including 5 atomic % based on the total atomic composition of metal species in the oxygen evolution reaction catalyst, suitably up to and including 1 atomic % based on the total atomic composition of metal species in the oxygen evolution reaction catalyst. Such metal species in the metallic form may comprise iridium and/or tantalum.

The crystalline oxide phase has the rutile MO₂ (M being a metal species) structure. Phase identification is conducted by comparing the X-ray diffraction pattern with a reference to the PDF-4+ database, Release 2021. The material contains a single crystalline oxide phase with relative reflection intensities which are consistent with a rutile MO₂ phase but reflection positions which do not match pure IrO₂. Put another way, the crystalline oxide phase is a single oxide structure comprising iridium and tantalum, i.e. a mixed metal oxide (not simply a mixture of iridium oxide and tantalum oxide). The crystalline oxide phase may be described as IrₓTa_{y}O₂ where x + y = 1. For example, x may be 0.60 to 0.80 and y may be 0.20 to 0.40. In particular, x may be 0.65 to 0.75 and y may be 0.25 to 0.35.

The lattice parameter a of the crystalline oxide phase is preferably greater than 4.550 Å. The upper limit for the lattice parameter a is not particularly limited but a is typically less than 4.800 Å, preferably less than 4.750 Å, more preferably less than 4.650 Å. For example, the lattice parameter a may be about 4.580 Å. The lattice parameter c of the crystalline oxide phase may be greater than 3.160 Å, preferably greater than 3.170 Å. The upper limit for the lattice parameter c is not particularly limited but c is typically less than 3.200 Å, suitably less than 3.180 Å. For example, the lattice parameter c may be about 3.177 Å. The values provided for the lattice parameters a and c are obtained at ambient temperature i.e. about 25 °C. Powder X-ray diffraction (PXRD) data is collected in reflection geometry using a Bruker AXS D8 diffractometer using Cu Kα radiation (λ = 1.5406 + 1.54439 Å) over the 10 < 2θ < 130° range in 0.04° steps. To extract lattice parameters, Pawley refinements are performed using Topas [1] with reflection profiles modelled using a fundamental parameters approach [2] with reference data collected from NIST660 LaB₆. The data is fitted from 20 to 77 ° 2Θ using a Pawley model in *P4₂*/*mnm* (the same space group as IrO₂) to extract the lattice parameters. For comparison rutile IrO₂ has a crystal phase parameter a of 0.4498nm.

The crystalline oxide phase may have a crystallite size calculated from the (110) *hkl* reflection in the range of and including 4.0 nm to 10.0 nm, preferably 6 nm to 8 nm. Suitably, the ratio of the crystallite size calculated from the (110) *hkl* reflection to the crystallite size calculated from the (002) *hkl* reflection is in the range of and including 1.0 to 6.0, suitably 1.2 to 5.5, preferably 2.5 to 4.0, for example 2.5 to 3.5. Powder X-ray diffraction (PXRD) data were collected in reflection geometry using a Bruker AXS D8 diffractometer using Cu Kα radiation (λ = 1.5406 + 1.54439 Å) over the 10 < 2θ < 130° range in 0.04° steps. Peak phase refinements are performed using Topas [1] with reflection profiles modelled using a fundamental parameters approach [2] with reference data collected from NIST660 LaB₆. The reflections from the rutile phase are fitted using a set of peaks with independent sample broadening to obtain crystallite sizes along the crystallographic planes. Crystallite size is calculated using the volume weighted column height LVol-IB method. [3]

The oxygen evolution reaction catalyst may also comprise an amorphous phase, suitably an amorphous oxide phase. The amorphous phase may comprise an oxide of tantalum, typically tantalum pentoxide Ta₂O₅. The degree of crystallinity, i.e. the ratio of areas between crystalline and amorphous phases, of the oxide material is at most 90%, typically at most 80%. Suitably, the degree of crystallinity of the oxide material is at least 60%. Suitably, the crystalline and amorphous phases constitute at least 90 % by weight of the oxide material, typically at least 95 % by weight, for example at least 99 % by weight. The oxide material may consist essentially of, preferably consist of, the crystalline oxide phase and the amorphous phase. Powder X-ray diffraction (PXRD) data were collected in reflection geometry using a Bruker AXS D8 diffractometer using Cu Kα radiation (λ = 1.5406 + 1.54439 Å) over the 10 < 2θ < 130° range in 0.04° steps. For the determination of the degree of crystallinity, X-ray scattering data from the crystalline oxide and amorphous phases are fitted from 20 to 77 ° 2Θ. The summed area from peaks modelling contributions from the crystalline phase and from the total X-ray scattering are used to calculate the percentage scattering.

In a second aspect, the present invention provides a method of synthesis of the oxygen evolution reaction catalyst according to the invention, the method comprising steps of:
providing an aqueous solution of compounds of iridium and tantalum, wherein the compounds of iridium and tantalum are dissolved in the aqueous solution;
spray drying the solution to form a dry powder; and
subjecting said powder to calcination at a temperature of less than 500 °C to thereby form the oxygen evolution reaction catalyst.

The present inventors have surprisingly found that by controlling the calcination temperature during production of the oxygen evolution reaction catalyst, it is possible to produce an oxygen evolution reaction catalyst having improved properties in a catalyst layer.

The step of providing an aqueous solution of compounds of iridium and tantalum may comprise sub-steps of providing an aqueous solution of a compound of iridium, and mixing said aqueous solution with an aqueous solution of a compound of tantalum.

The iridium compound and tantalum compound may be provided in amounts suitable to give the desired ratio of iridium to tantalum. For example, an Ir:Ta ratio of from 6 to 8 Ir : 2 to 4 Ta, such as 7:3.

The aqueous solutions of iridium and tantalum compounds respectively may be prepared by dissolving a suitable iridium compound or tantalum compound, if required adding a solubilising agent to facilitate dissolution of the compound in water. A suitable iridium compound is IrCl₃. A suitable tantalum compound is TaCl₅, which requires addition of hydrochloric acid as a solubilising agent.

The step of spray drying the resulting mixture to form a dry powder may be performed with an inlet temperature of, for example, about 200 to about 400 °C, and an atomiser pressure of about 2 bar with an air flow rate at, for example, about 5 to about 15 kg/hr.

In making the oxygen evolution reaction catalyst, a calcination step is used. The calcination step is a two-stage calcination process, where the powder is subjected to calcination at less than 500 °C, preferably ≤ 450 °C, and preferably ≥ 400 °C for a first specified time period, and is subsequently subjected to further calcination at less than 500 °C, preferably ≤450 °C, and preferably ≥ 400 °C for a second specified time period. The first and second calcination steps may take place at the same temperature, or they may take place at a different temperature. The first and second time periods may be the same, or they may be different. The length of the single calcination step, the first specified time period and the second specified time period for calcination may suitably be 1 hour or more, typically 3 hours or more. The length of the single calcination step, the first specified time period and the second specified time period for calcination may suitably be at most 10 hours.

Optionally, additional processing steps may be performed between the first calcination step and the second calcination step, for example the powder may undergo stirring or milling. This has the advantage that agglomerates can be broken up before the second calcination step, allowing for more even calcination. However, the first and second calcination steps may be performed successively, with no further processing steps being performed between the first calcination step and the second calcination step. Calcination may also be performed with continuous agitation of the powder such as in rotary calcination with or without the inclusion of beads or balls to facilitate the break-up of agglomerates.

Calcination may be performed in a suitable gaseous atmosphere, for example in air, N₂, Ar, He, CO₂, CO, O₂, H₂, and mixtures thereof. Preferably, calcination is performed in an air atmosphere.

The oxygen evolution reaction catalyst of the invention may find application in various electrochemical applications. However one particularly preferred application is in an electrochemical fuel cell.

In a third aspect, the present invention provides a catalyst layer comprising the oxygen evolution reaction catalyst according to the invention and a second electrocatalyst material. In this instance the oxygen evolution reaction catalyst of the invention is the first electrocatalyst.

The second electrocatalyst material may suitably be selected from:
(i) the platinum group metals (platinum, palladium, rhodium, ruthenium, iridium and osmium);
(ii) gold or silver;
(iii) a base metal;
or an alloy or mixture comprising one or more of these metals or their oxides. A base metal is tin or a transition metal which is not a noble metal. A noble metal is a platinum group metal (platinum, palladium, rhodium, ruthenium, iridium or osmium), silver or gold. Preferred base metals are copper, cobalt, nickel, zinc, iron, titanium, molybdenum, vanadium, manganese, niobium, tantalum, chromium and tin.

The second electrocatalyst material preferably does not comprise iridium or tantalum. Preferably, the second electrocatalyst material is a fuel cell anode or cathode, preferably anode, electrocatalyst material. Typically, the second electrocatalyst material comprises a platinum group metal other than iridium or an alloy of a platinum group metal other than iridium, preferably with a base metal, preferred base metals as defined above. In particular, the second electrocatalyst material comprises platinum or an alloy of platinum with a base metal, preferred base metals as defined above, more preferably titanium, vanadium, chromium, niobium or tantalum. Alternatively preferably, the second electrocatalyst material may comprise an alloy of platinum with another platinum group metal, preferably rhodium or ruthenium.

Preferably, the catalyst layer is an anode catalyst layer, preferably an anode catalyst layer for a proton exchange membrane fuel cell.

The loading of the primary metal, e.g. the platinum group metal as defined herein, of the second electrocatalyst material in the catalyst layer may be selected based on the intended use of the catalyst layer, and in particular, based on whether the catalyst layer is intended for use at the anode, or at the cathode. For use at an anode, preferably for a proton exchange membrane fuel cell, the loading for primary metal, e.g. platinum group metal as defined herein, in the catalyst layer may suitably be from 0.02 to 0.2 mg/cm², typically 0.02 to 0.15 mg/cm², preferably 0.02 to 0.1 mg/cm².

The second electrocatalyst material is preferably in the form of particles which may be supported, or unsupported. The term "supported" will be readily understood by a skilled person. For example, it will be understood that the term "supported" means that the electrocatalyst particles are dispersed on the support material and bound or fixed to the support material by physical or chemical bonds. For instance, the electrocatalyst may be bound or fixed to the support material by way of ionic or covalent bonds, or non-specific interactions such as van der Waals forces.

The oxygen evolution reaction catalyst of the invention is preferably in the form of particles which may be supported or unsupported, preferably unsupported. The oxygen evolution reaction catalyst of the invention is preferably in the form of particles dispersed in the catalyst layer.

Where particles are supported, the support material may be an electrically conductive carbon support material. Suitably, the support material is a carbon powder which may be, for example, a carbon black or graphitised carbon black for example a commercially available carbon black (such as from Cabot Corp. (Vulcan^{®} XC72R) or Akzo Nobel (the Ketjen^{®} black series)). Another suitable carbon support material is an acetylene black (e.g. those available from Chevron Phillips (Shawinigan Black^{®}) or Denka). The support material may also be an electrically conductive carbon support material specifically designed for use in a fuel cell, such as those described in WO2013/045894. Alternatively, the support material may be a non-carbonaceous material. Examples of such a support material include titania, niobia, tantala, tungsten carbide, hafnium oxide or tungsten oxide. Such oxides and carbides may also be doped with other metals to increase their electrical conductivity, for example niobium doped titania.

The oxygen evolution reaction catalyst of the invention and the second electrocatalyst material may be supported on the same support material or a different support material.

The weight ratio of the oxygen evolution reaction catalyst of the invention to the second electrocatalyst material in the catalyst layer may be from 10:1 to 1:10. The weight ratio may be selected depending on whether the catalyst layer is intended for use at the anode or at the cathode. In the case of an anode catalyst layer, preferably for a proton exchange membrane fuel cell, the weight ratio is suitably at least 0.5:1, preferably at least 0.75:1. The weight ratio is suitably at most 10:1, preferably at most 5:1, more preferably at most 2:1, yet more preferably at most 1:1. In the case of a cathode catalyst layer, preferably for a proton exchange membrane fuel cell, the weight ratio is suitably from 1:1 to 1:10, preferably from 1:2 to 1:5.

The catalyst layer may comprise further components in addition to the oxygen evolution reaction catalyst according to the invention and the second electrocatalyst material. Such components include, but are not limited to: an ion-conducting polymer, such as a proton conducting polymer, included to improve the ionic conductivity within the layer; a hydrogen peroxide decomposition catalyst; a hydrophobic additive (e.g. a polymer such as polytetrafluoroethylene (PTFE) or an inorganic solid with or without surface treatment) or a hydrophilic additive (e.g. a polymer of an inorganic solid, such as an oxide) to control reactant and water transport characteristics. The choice of additional components will depend on whether the catalyst layer is for use at the anode or the cathode and it is within the capability of a skilled person to determine which additional components are appropriate.

To prepare the catalyst layer, the oxygen evolution reaction catalyst of the invention, supported or unsupported, and the second electrocatalyst material, supported or unsupported, and any additional components can be dispersed in an aqueous and/or organic solvent to prepare a catalyst ink. If required, particle break-up may be carried out by methods known in the art, such as high shear mixing, milling, ball milling, passing through a microfluidiser etc. or a combination thereof, to achieve a suitable particle size distribution. After preparation of the catalyst ink, the ink may be deposited onto a substrate (e.g. gas diffusion layer, ion-conducting membrane or a carrier/transfer substrate) to form the catalyst layer. The ink may be deposited by any suitable technique known to those in the art, including but not limited to gravure coating, slot die (slot, extrusion) coating, screen printing, rotary screen printing, inkjet printing, spraying, painting, bar coating, pad coating, gap coating techniques such as knife or doctor blade over roll, and metering rod application.

When the catalyst layer is deposited onto a carrier/transfer substrate, by coating of a catalyst ink onto the carrier/transfer substrate, it forms a catalysed carrier/transfer substrate. The carrier/transfer substrate is intended to be removed from the layer in a subsequent step. For example, the catalyst layer may be transferred, by decal transfer, to a gas diffusion layer or ion-conducting membrane, the carrier/transfer substrate being removed immediately after, or at some point after, the transfer process.

Additional layers may be deposited on the exposed face of the catalyst layer prior to removal of the carrier/transfer substrate; for example, an ion-conducting ionomer layer may be applied from a dispersion of ionomer using any suitable deposition technique known as described above in relation to deposition of the catalyst layer. Further additional layers can be added as required, for example as described in PCT Patent Application No. GB2015/050864. The carrier/transfer substrate is removed from the catalyst layer at an appropriate time. The carrier/transfer substrate may be formed from any suitable material from which the catalyst layer can be removed without damage thereto. Examples of suitable materials include a fluoropolymer, such as polytetrafluoroethylene (PTFE), ethylene tetrafluoroethylene (ETFE), perfluoroalkoxy polymer (PFA), fluorinated ethylene propylene (FEP - a copolymer of hexafluoropropylene and tetrafluoroethylene) and polyolefins, such as biaxially oriented polypropylene (BOPP).

The characteristics of the catalyst layer, such as the thickness, electrocatalyst loading, porosity, pore size distribution, average pore size and hydrophobicity will depend on whether it is being used at the anode or cathode. The catalyst layer thickness may suitably be at least 1 µm, typically at least 5 µm. The catalyst layer thickness may suitably be no more than 15 µm, typically no more than 10 µm.

In a fourth aspect, the present invention provides a gas diffusion electrode comprising a gas diffusion layer and a catalyst layer according to the third aspect.

Preferably, the catalyst layer is directly adjacent to the gas diffusion layer. This may be achieved by e.g. depositing the catalyst layer directly onto the gas diffusion layer. The gas diffusion layer may be based on or comprise conventional gas diffusion substrates. Typical substrates include non-woven papers or webs comprising a network of carbon fibres and a thermoset resin binder (e.g. the TGP-H series of carbon fibre paper available from Toray Industries Inc., Japan or the H2315 series available from Freudenberg FCCT KG, Germany, or the Sigracet^{®} series available from SGL Technologies GmbH, Germany or AvCarb^{®} series from Ballard Power Systems Inc.), or woven carbon cloths. The carbon paper, web or cloth may be provided with a pre-treatment prior to fabrication of the electrode and being incorporated into a membrane electrode assembly either to make it more wettable (hydrophilic) or more wet-proofed (hydrophobic). The nature of any treatments will depend on the type of fuel cell and the operating conditions that will be used. The substrate can be made more wettable by incorporation of materials such as amorphous carbon blacks via impregnation from liquid suspensions, or can be made more hydrophobic by impregnating the pore structure of the substrate with a colloidal suspension of a polymer such as PTFE or polyfluoroethylenepropylene (FEP), followed by drying and heating above the softening point of the polymer. For applications such as the proton exchange membrane fuel cell, a microporous layer may also be applied to the gas diffusion substrate on the face that will contact the catalyst layer. The microporous layer typically comprises a mixture of a carbon black and a polymer such as polytetrafluoroethylene (PTFE).

In a fifth aspect, the present invention provides a catalysed membrane comprising an ion-conducting membrane and a catalyst layer according to the third aspect.

Here, the catalyst layer is deposited onto an ion-conducting membrane, either by direct coating of a catalyst ink onto the membrane, or indirectly by transfer from a carrier or transfer substrate, to form a catalyst coated membrane. The ion-conducting membrane may be any membrane suitable for use in a proton exchange membrane fuel cell, for example the membrane may be based on a perfluorinated sulphonic acid material such as Nafion^{™} (Chemours Company), Aquivion^{®} (Solvay Specialty Polymers), Flemion^{®} (Asahi Glass Group) and Aciplex^{™} (Asahi Kasei Chemicals Corp.). Alternatively, the membrane may be based on a sulphonated hydrocarbon membrane such as those available from FuMA-Tech GmbH as the fumapem^{®} P, E or K series of products, JSR Corporation, Toyobo Corporation, and others. Alternatively, the membrane may be based on polybenzimidazole doped with phosphoric acid which will operate in the range 120 °C to 180 °C.

The ion-conducting membrane component may comprise one or more materials that confer mechanical strength to the ion-conducting membrane component. For example, the ion-conducting membrane component may contain a porous reinforcing material, such as an expanded PTFE material or a nanofibre network, such as an electro-spun fibre network.

The ion-conducting membrane may comprise one or more hydrogen peroxide decomposition catalysts either as a layer on one or both faces of the membrane, or embedded within the membrane, either uniformly dispersed throughout or in a layer. Examples of the hydrogen peroxide decomposition catalyst suitable for use are known to those skilled in the art and include metal oxides, such as cerium oxides, manganese oxides, titanium oxides, beryllium oxides, bismuth oxides, tantalum oxides, niobium oxides, hafnium oxides, vanadium oxides and lanthanum oxides; suitably cerium oxides, manganese oxides or titanium oxides; preferably cerium dioxide (ceria).

The ion-conducting membrane component may optionally comprise a recombination catalyst, in particular a catalyst for the recombination of unreacted H₂ and O₂, that can diffuse into the membrane from the anode and cathode respectively, to produce water. Suitable recombination catalysts comprise a metal (such as platinum or palladium) on a high surface area oxide support material (such as silica, titania, zirconia) or carbon support. More examples of recombination catalysts are disclosed in EP0631337 and WO00/24074.

In a sixth aspect, the present invention provides a membrane electrode assembly comprising a catalyst layer according to the third aspect, a gas diffusion electrode according to the fourth aspect or a catalysed membrane according to the fifth aspect.

As a skilled person will understand, a membrane electrode assembly can be constructed by a number of methods, providing it contains at least one catalyst layer. For example, the membrane electrode assembly may comprise a catalyst coated ion-conducting membrane which comprises two catalyst layers at least one of which is a catalyst layer of the invention, with a gas diffusion layer applied to each catalyst layer. Alternatively, the membrane electrode assembly may comprise an ion-conducting membrane sandwiched between two gas diffusion electrodes, at least one of which is a gas diffusion electrode of the invention. The membrane electrode assembly may also comprise a catalyst coated ion-conducting membrane with one catalyst layer, and on the opposite face of the ion-conducting membrane a gas diffusion electrode in which either or both of the catalyst layer and the gas diffusion electrode are of the invention.

Electrochemical devices in which the catalyst layer, gas diffusion electrode, catalysed membrane and membrane electrode assembly of the invention may be used include fuel cells, in particular proton exchange membrane fuel cells. Accordingly, in a seventh aspect, the present invention provides a fuel cell comprising a catalyst layer according to the third aspect, a gas diffusion electrode according to the fourth aspect, a catalysed membrane according to the fifth aspect, or a membrane electrode assembly according to the sixth aspect. The fuel cell of the invention is preferably a proton exchange membrane fuel cell.

The proton exchange membrane fuel cell could be operating on hydrogen or a hydrogen-rich fuel at the anode or could be fuelled with a hydrocarbon fuel such as methanol. The catalyst layer, gas diffusion electrode, catalysed membrane and membrane electrode assembly of the invention may also be used in fuel cells in which the membranes use charge carriers other than protons, for example OH⁻ conducting membranes such as those available from Solvay Solexis S.p.A., FuMA-Tech GmbH.

The catalyst layer and gas diffusion electrode of the invention may also be used in other low temperature fuel cells that employ liquid ion conducting electrolytes, such as aqueous acids and alkaline solutions or concentrated phosphoric acid. Other electrochemical devices in which the catalyst layer, gas diffusion electrode, catalysed membrane and membrane electrode assembly of the invention may be used are as the anode electrode of regenerative fuel cells where the hydrogen oxidation and oxygen evolution reactions are both performed.

The oxygen evolution reaction catalyst of the invention may also be used in the anode of a proton exchange membrane electrolyser. Accordingly, in an eighth aspect, the present invention provides an anode catalyst layer for a proton exchange membrane electrolyser, the anode catalyst layer comprising an oxygen evolution reaction catalyst of the invention. In a ninth aspect, the present invention provides a proton exchange membrane electrolyser comprising the anode catalyst layer of the eight aspect of the invention. A skilled person will understand that there are similarities between such a catalyst layer and the catalyst layer of the third aspect of the invention and that any aspects discussed above regarding the catalyst layer of the third aspect of the invention which are compatible with the anode of a proton exchange membrane electrolyser are intended to apply to the catalyst layer of the eight aspect of the invention.

The invention includes the combination of the aspects and preferred features described except where such a combination is clearly impermissible or expressly avoided. Specifically, any aspect of the invention may be combined with any other aspect of the invention, unless the context demands otherwise. Any of the preferred or optional features of any aspect may be combined, singly or in combination, with any aspect of the invention, unless the context demands otherwise.

### Summary of the Figures

Embodiments and experiments illustrating the principles of the invention will now be discussed with reference to the accompanying figures in which:
**Figure 1** shows the X-ray diffraction pattern of an oxygen evolution reaction catalyst according to the present invention.
**Figure 2** is a plot of voltage and resistance at a 200 mA/cm² against number of reversal holds for a membrane electrode assembly according to the invention and two other membrane electrode assemblies.
**Figure 3** is a plot showing carbon corrosion against number of reversal holds at a set current density for a membrane electrode assembly according to the invention and two other membrane electrode assemblies.

### Detailed Description of the Invention

Aspects and embodiments of the present invention will now be discussed with reference to the accompanying figures and examples. Further aspects and embodiments will be apparent to those skilled in the art. All documents mentioned in this text are incorporated herein by reference.

Three different materials were prepared and characterised: the first of these ('Example 1') is a high surface area oxygen evolution reaction catalyst according to the present invention. The second material ('Comparative Example 1') is an iridium tantalum mixed oxide oxygen evolution reaction catalyst as disclosed in WO11/021034. The third material ('Comparative Example 2') is also an iridium tantalum mixed oxide oxygen evolution reaction catalyst, similar to those disclosed in WO11/021034, but having a different ratio of Ir:Ta.

As shown and discussed below, it was found that membrane electrode assemblies with anodes containing an oxygen evolution reaction catalyst according to the present invention displayed improved activity for the OER and were shown to exhibit improved stability to cell reversal, and reduced carbon loss after repeated reversal events.

### Example 1: Synthesis of an oxygen evolution reaction catalyst according to the invention

The method of synthesis of the oxygen evolution reaction catalyst according to this example can be split into three main steps:
1) Provision of an aqueous solution of compounds of iridium and tantalum;
2) Spray drying of resulting mixture; and
3) Calcination of the product to form an oxygen evolution reaction catalyst.
TaCl₅ (Alfa Aesar) was received in sealed ampoules of ~100gms each. These were scored and the TaCl₅ powder poured into a glass bottle. The mass of TaCl₅ was measured to an accuracy of +/- 0.01g. 200ml of conc. HCl was measured out and poured into a separate glass bottle. The TaCl₅ was slowly dissolved in the conc. HCl under constant stirring.

Using the measured mass of TaCl₅, IrCl₃ was weighed out to give a final Ir:Ta ratio of 7:3. It was then dissolved in a beaker containing 1400 ml of demineralised H₂O under constant stirring. This process was repeated, 4 more times, to obtain 5 separate bottles containing ~100g of TaCl₅ in 200 ml of conc. HCl and 5 corresponding beakers containing IrCl₃ dissolved in H₂O.

Prior to spray drying, TaCl₅ (in conc. HCl) was mixed with its corresponding IrCl₃ (in demineralised H₂O) solution and stirred. This mixture was fed through a 5mm diameter silicone feed tube and 1.0ml nozzle and spray dried (GEA-Niro A/S mobile unit spray dryer) with an inlet temperature of 290 °C and an atomiser pressure of 2 bar with an air flow rate of 9 kg/hr +/-0.5 kg/hr. The resultant powder was collected in a powder bottle and the process repeated for each TaCl₅/IrCl₃ pair.

The powder from each powder bottle containing dried Ir/Ta chloride was placed into separate crucibles and calcined at a temperature of 450°C [ramp rate of 10°C min⁻¹ from room temperature] for 6 hours. The powder was then milled at 14000 RPM with a sieve mesh size of 0.08cm to break up agglomerates. The milled powder was further calcined for another 6 hours at 450°C [ramp rate of 10°C min⁻¹ from room temperature]. This process was repeated for each crucible and the final products of each were blended on a roller.

### Comparative Example 1: Synthesis of a comparative oxygen evolution reaction catalyst

For comparison, an IrTa mixed oxide oxygen evolution reaction catalyst was prepared using a conventional method as disclosed in WO 2011/021034. Calcination was performed at a temperature of 500°C.

### Comparative Example 2: Synthesis of a comparative oxygen evolution reaction catalyst with different Ir:Ta ratio

To assess the effect of changing the Ir:Ta ratio on the oxygen evolution reaction catalyst, a further comparative example was prepared using the same method as for Comparative Example 1, but wherein the amount of TaCl₅ and IrCl₃ used were adjusted to give a final Ir:Ta weight ratio of 8:2 and calcination was performed at a temperature of 500°C.

### BET surface area analysis of samples

The BET surface area of the oxygen evolution reaction catalysts produced were determined based on the N₂ adsorption isotherm at 77K, according to ISO standard 9277:2010(en).
The following results were obtained:

**Table 1**

| **Sample** | **BET Surface Area (m²/g)** |
|---|---|
| Example 1 | 71.5 |
| Comparative Example 1 | 46.00 |
| Comparative Example 2 | 28.40 |

The oxygen evolution reaction catalyst of Example 1 was found to exhibit far higher surface area than the oxygen evolution reaction catalysts of Comparative Example 1 and Comparative Example 2.

### X-Ray Diffraction analysis

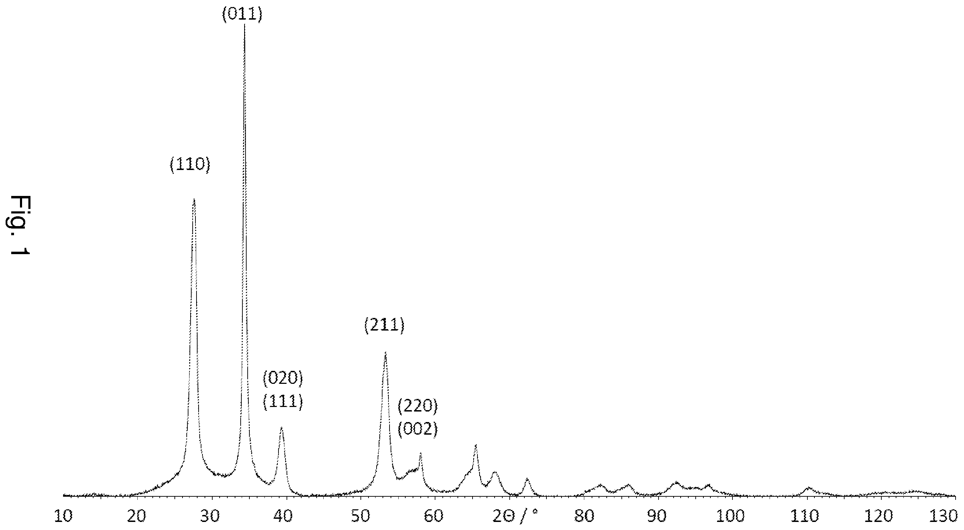

Fig. 1 shows the X-ray diffraction pattern of material produced according to Example 1.

### X-ray data collection

Powder X-ray diffraction (PXRD) data were collected in reflection geometry using a Bruker AXS D8 diffractometer using Cu Kα radiation (λ = 1.5406 + 1.54439 Å) over the 10 < 2θ < 130° range in 0.04° steps. Phase identification was conducted using Bruker AXS Diffrac Eva V4.2 (2014) with reference to the PDF-4+ database, Release 2021. This showed that the material contains a single crystalline oxide phase with reflection intensities which are consistent with a rutile MO₂ phase but reflection positions which do not match IrO₂.

### Sample fitting

Pawley and peak phase refinements were performed using Topas[1] with reflection profiles modelled using a fundamental parameters approach[2] with reference data collected from NIST660 LaB₆. The data were fitted from 20 to 77° 2Θ using a Pawley model in *P4₂*/*mnm* (the same space group as IrO₂) to extract the lattice parameters. The data were separately fitted using a set of peaks with independent sample dependant broadening, for the rutile phase, to obtain crystallite sizes along a selection of crystallographic planes. In both cases contributions from any amorphous material were fitted using a separate set of peaks, to allow degree of crystallinity calculations. All crystallite sizes have been calculated using the volume weighted column height LVol-IB method.[3]

Table 2 provides the degree of crystallinity and the lattice parameters a and c obtained from the data collected on Example 1.

**Table 2**

| **Degree of Crystallinity** | 68% (~32% of the scattering comes from amorphous material) |
|---|---|
| ***a*/Å** | 4.5800(6) |
| ***c*/Å** | 3.1770(5) |

Table 3 provides crystallite sizes obtained from the (110) and (002) *hkl* reflections.

**Table 3**

| ***(hkl)*** | **Position** | **C.S. / nm** |
|---|---|---|
| (110) | 27.519(2) | 7.6(17) |
| (002) | 57.990(10) | 25(16) |

### Preparation of membrane electrode assemblies

MEA 1 contained the oxygen evolution reaction catalyst of Example 1 in the anode, MEA 2 contained the oxygen evolution reaction catalyst of Comparative Example 1 in the anode and MEA 3 contained the oxygen evolution reaction catalyst of Comparative Example 2 in the anode.

Anode catalyst layers were prepared by forming inks containing a PFSA ionomer dispersed in a water propan-1-ol mixture, a 20 wt% Pt/C electrocatalyst material, and the oxygen evolution reaction catalyst. This mixture was mechanically agitated using an overhead stirrer until all of the catalyst had been wetted and dispersed in the liquid. The ink was then processed through an Eiger ball mill to form a well dispersed ink. The platinum loading was 0.08 mgPt/cm², the loading of the oxygen evolution reaction catalyst of the invention or comparative oxygen evolution reaction catalyst was 0.067 mglr/cm², and the ratio of platinum electrocatalyst to oxygen evolution reaction catalyst of the invention or comparative oxygen evolution reaction catalyst was 1:0.86.

Cathode catalyst layers contained a 50 wt% Pt/C electrocatalyst in which the carbon support is a carbon specifically designed for use in a fuel cell as described in WO2013/045894. Cathode catalyst layers were prepared by forming inks containing a PFSA ionomer dispersed in a water/propan-1-ol mixture and the 50 wt% Pt/C electrocatalyst. This mixture was mechanically agitated using an overhead stirrer until all of the catalyst material had been wetted and dispersed in the liquid. The ink was then processed through an Eiger ball mill to form a well dispersed ink. The platinum loading was 0.4 mgPt/cm².

Catalyst coated ion-conducting membranes of 217 cm² active area were prepared by depositing the anode ink and cathode inks onto PTFE sheets to form catalyst layers and transferring the appropriate layers to either side of PFSA reinforced membranes (20 µm thickness).

A gas diffusion layer was applied to each face of each catalyst coated ion-conducting membrane to form the complete membrane electrode assemblies. The gas diffusion layer used was a carbon fibre paper with a hydrophobic microporous layer containing carbon and PTFE applied to the face in contact with the catalyst coated ion-conducting membrane.

### Membrane Electrode Assembly Reversal Testing

The MEAs were testing in a single cell format. First the MEAs were conditioned using a cathode starvation protocol where the MEA was held at 80°C, 100 kPa pressure and 100% RH on both anode and cathode. A current of 500 mAcm⁻² was drawn from the cell and the cathode stoichiometry was cycled between 2.0 and 0.0, whilst the anode stoichiometry was kept constant at 1.5. Following 17 of these cathode starvation events the MEA was then kept with a constant cathode stoichiometry of 2.0 and a current of 500 mAcm⁻² for 2 hours. Following this, a re-conditioning protocol was run where the MEA was held at the experimental conditions of 65°C, Ambient pressure and 50% RH for 1 hour.
At the experimental conditions a BOL polarisation curve between OCV and 2000 mAcm⁻² was completed to assess performance at the beginning of life.

Next, the MEA was subject to cell reversal cycling where the MEA was held at 200 mAcm⁻², and the anode gas stream was switched to N₂ and held for 5 minutes, followed by switching this gas stream back to H₂ and drawing a current of 500 mAcm⁻² for 15 minutes. This cell reversal cycle was repeated 6 times before repeating the polarisation curve performance assessment. This sequence of 6 reversal cycles followed by a polarisation curve performance test was repeated until the performance of the MEA during the performance test was less than 0.35V at 1Acm⁻² or the cell voltage during the reversal holds was less than -1.2V.

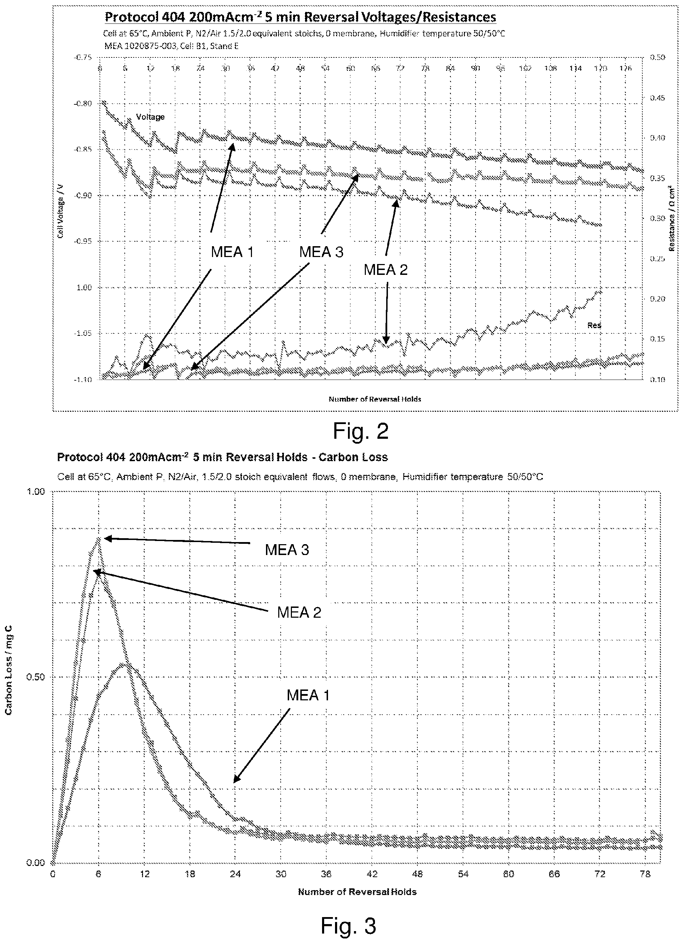

Fig. 2 is a plot of voltage and resistance at 200 mA/cm² against number of reversal holds for a membrane electrode assembly according to the invention MEA1 and the two other membrane electrode assemblies MEA 2 and MEA 3. It can be seen that at the beginning of the test, the voltage is less negative for MEA1, showing that use of the catalyst layer containing the oxygen evolution reaction catalyst of the invention provides an inherently more active membrane electrode assembly. Moreover, this activity was maintained at a high level for a number of reversal holds showing high tolerance of the catalyst layer to cell reversal. MEA 3 also held activity better than MEA 2, showing an improvement in cell reversal tolerance for catalyst layers containing the oxygen evolution reaction catalysts of Comparative Example 2 as compared to benchmark Comparative Example 1.

### Carbon Corrosion Testing

During the reversal cycling described the CO₂ content of the anode and the cathode exhausts was monitored using a Vaisala CARBOCAP^{®} Carbon Dioxide Probe GMP343. The concentration of CO₂ in the exhaust gas streams over the duration of the experiment is integrated to calculate a total C loss during the experiment.

Fig. 3 is a graph showing carbon loss with increasing number of reversal holds. It can be seen that MEA 1 suffered significantly less carbon corrosion as compared with both MEA 2 and MEA 3. Accordingly, the oxygen evolution reaction catalyst of the invention provides better protection from carbon corrosion caused by cell reversal than the comparative oxygen evolution reaction catalysts.

### References

1. Topas v4.2 / v5.0: General Profile and Structure Analysis Software for Powder Diffraction Data, Bruker AXS, Karlsruhe, Germany, (2003-2015).
2. R.W. Cheary and A. Coelho, J. Appl. Cryst. (1992), 25, 109-121
3. F. Bertaut and P. Blum (1949) C.R. Acad. Sci. Paris 229, 666

## Claims

1. An oxygen evolution reaction catalyst, wherein the oxygen evolution reaction catalyst is an oxide material comprising iridium and tantalum;
wherein the oxygen evolution reaction catalyst comprises a crystalline oxide phase having the rutile crystal structure;
wherein the crystalline oxide phase has a lattice parameter a of greater than 4.510 Å; and
wherein the oxygen evolution reaction catalyst has a BET surface area of at least 50 m²/g;
wherein the oxygen evolution reaction catalyst comprises:
iridium present in an amount in the range of and including 60 to 95 atomic % based on the total atomic composition of iridium and tantalum species in the oxygen evolution reaction catalyst; and
tantalum present in an amount in the range of and including 5 to 40 atomic % based on the total atomic composition of iridium and tantalum species in the oxygen evolution reaction catalyst; and
wherein the crystalline oxide phase comprises a single phase oxide structure comprising iridium and tantalum.

2. A method of synthesis of an oxygen evolution reaction catalyst according to claim 1, the method comprising steps of:
providing an aqueous solution of compounds of iridium and tantalum, wherein the compounds of iridium and tantalum are dissolved in the aqueous solution;
spray drying the solution to form a dry powder; and
subjecting said powder to calcination at a temperature of less than 500 °C to thereby form the oxygen evolution reaction catalyst; wherein
the step of subjecting said powder to calcination to thereby form the oxygen evolution reaction catalyst comprises sub-steps of: subjecting the powder to calcination at less than 500 °C for a first specified time period, and subsequently subjecting the powder to further calcination at less than 500 °C for a second specified time period.

3. The method of claim 2, wherein the step of providing an aqueous solution of compounds of iridium and tantalum comprises sub-steps of:
providing an aqueous solution of a compound of iridium, and mixing said aqueous solution with an aqueous solution of a compound of tantalum.

4. A catalyst layer comprising the oxygen evolution reaction catalyst of claim 1 and a second electrocatalyst material.

5. A catalyst layer of claim 4, wherein the catalyst layer is an anode catalyst layer, optionally an anode catalyst layer for a proton exchange membrane fuel cell.

6. The catalyst layer of claim 4 or claim 5, wherein the second electrocatalyst material is selected from:
the platinum group metals (platinum, palladium, rhodium, ruthenium, iridium and osmium);
gold or silver;
a base metal; or
an alloy or mixture comprising one or more of these metals or their oxides.

7. The catalyst layer of any one of claims 4 to 6, wherein the weight ratio of the oxygen evolution reaction catalyst to the second electrocatalyst material in the catalyst layer is from 10:1 to 1:10.

8. A gas diffusion electrode comprising a gas diffusion layer and a catalyst layer as claimed in any one of claims 4 to 7.

9. A catalysed membrane comprising an ion-conducting membrane and a catalyst layer as claimed in any one of claims 4 to 7.

10. A membrane electrode assembly comprising a catalyst layer as claimed in any one of claims 4 to 7, a gas diffusion electrode as claimed in claim 8, or a catalysed membrane as claimed in claim 9.

11. A fuel cell comprising a catalyst layer as claimed in any one of claims 4 to 7, a gas diffusion electrode as claimed in claim 8, a catalysed membrane as claimed in claim 9, or a membrane electrode assembly as claimed in claim 10.

## Patentansprüche

1. Katalysator für die Sauerstoffentwicklungsreaktion, wobei der Katalysator für die Sauerstoffentwicklungsreaktion ein Oxidmaterial ist, das Iridium und Tantal umfasst;
wobei der Katalysator für die Sauerstoffentwicklungsreaktion eine kristalline Oxidphase mit Rutilkristallstruktur umfasst;
wobei die kristalline Oxidphase einen Gitterparameter a von mehr als 4,510 Å aufweist und
wobei der Katalysator für die Sauerstoffentwicklungsreaktion eine BET-Fläche von mindestens 50 m²/g aufweist;
wobei der Katalysator für die Sauerstoffentwicklungsreaktion umfasst:
Iridium, das in einer Menge im Bereich von und einschließlich 60 bis 95 Atom-%, bezogen auf die gesamte atomare Zusammensetzung der Iridium- und Tantalspezies in dem Katalysator für die Sauerstoffentwicklungsreaktion, vorliegt; und
Tantal, das in einer Menge im Bereich von und einschließlich 5 bis 40 Atom-%, bezogen auf die gesamte atomare Zusammensetzung der Iridium- und Tantalspezies in dem Katalysator für die Sauerstoffentwicklungsreaktion, vorliegt; und
wobei die kristalline Oxidphase eine einphasige Oxidstruktur, umfassend Iridium und Tantal, umfasst.

2. Verfahren zur Synthese eines Katalysators für die Sauerstoffentwicklungsreaktion nach Anspruch 1, wobei das Verfahren die folgenden Schritte umfasst:
Bereitstellen einer wässrigen Lösung von Verbindungen aus Iridium und Tantal, wobei die Verbindungen aus Iridium und Tantal in der wässrigen Lösung gelöst sind;
Sprühtrocknen der Lösung, um ein trockenes Pulver zu bilden; und
Durchführen einer Kalzinierung an dem Pulver bei einer Temperatur von weniger als 500 °C, um dadurch den Katalysator für die Sauerstoffentwicklungsreaktion zu bilden; wobei
der Schritt, bei dem das Pulver einer Kalzinierung unterzogen wird, um dadurch den Katalysator für die Sauerstoffentwicklungsreaktion zu bilden, die folgenden Teilschritte umfasst: Durchführen einer Kalzinierung an dem Pulver für eine erste festgelegte Zeit bei weniger als 500 °C und anschließendes Durchführen einer weiteren Kalzinierung an dem Pulver für eine zweite festgelegte Zeit bei weniger als 500 °C.

3. Verfahren nach Anspruch 2, wobei der Schritt des Bereitstellens einer wässrigen Lösung von Verbindungen aus Iridium und Tantal die folgenden Teilschritte umfasst:
Bereitstellen einer wässrigen Lösung einer Iridiumverbindung und Mischen der wässrigen Lösung mit einer wässrigen Lösung einer Tantalverbindung.

4. Katalysatorschicht, umfassend den Katalysator für die Sauerstoffentwicklungsreaktion nach Anspruch 1 und ein zweites Elektrokatalysatormaterial.

5. Katalysatorschicht nach Anspruch 4, wobei die Katalysatorschicht eine Anodenkatalysatorschicht, optional eine Anodenkatalysatorschicht für eine Protonenaustauschmembran-Brennstoffzelle, ist.

6. Katalysatorschicht nach Anspruch 4 oder Anspruch 5, wobei das zweite Elektrokatalysatormaterial ausgewählt ist aus:
den Platingruppenmetallen (Platin, Palladium, Rhodium, Ruthenium, Iridium und Osmium);
Gold oder Silber;
einem unedlen Metall oder
einer Legierung oder Mischung, umfassend eines oder mehrere dieser Metalle oder ihrer Oxide.

7. Katalysatorschicht nach einem der Ansprüche 4 bis 6, wobei das Gewichtsverhältnis des Katalysators für die Sauerstoffentwicklungsreaktion zum zweiten Elektrokatalysatormaterial in der Katalysatorschicht 10:1 bis 1:10 beträgt.

8. Gasdiffusionselektrode, umfassend eine Gasdiffusionsschicht und eine Katalysatorschicht nach einem der Ansprüche 4 bis 7.

9. Katalysierte Membran, umfassend eine ionenleitende Membran und eine Katalysatorschicht nach einem der Ansprüche 4 bis 7.

10. Membran-Elektroden-Anordnung, umfassend eine Katalysatorschicht nach einem der Ansprüche 4 bis 7, eine Gasdiffusionselektrode nach Anspruch 8 oder eine katalysierte Membran nach Anspruch 9.

11. Brennstoffzelle, umfassend eine Katalysatorschicht nach einem der Ansprüche 4 bis 7, eine Gasdiffusionselektrode nach Anspruch 8, eine katalysierte Membran nach Anspruch 9 oder eine Membran-Elektroden-Anordnung nach Anspruch 10.

## Revendications

1. Catalyseur de réaction de dégagement d'oxygène, dans lequel le catalyseur de réaction de dégagement d'oxygène est un matériau d'oxyde comprenant de l'iridium et du tantale ;
dans lequel le catalyseur de réaction de dégagement d'oxygène comprend une phase d'oxyde cristallin ayant la structure cristalline de rutile ;
dans lequel la phase d'oxyde cristallin a un paramètre de réseau a supérieur à 4,510 Å ; et
dans lequel le catalyseur de réaction de dégagement d'oxygène a une surface spécifique BET d'au moins 50 m²/g ;
dans lequel le catalyseur de réaction de dégagement d'oxygène comprend :
de l'iridium présent en une quantité dans la plage de et y compris 60 à 95 % atomiques en fonction de la composition atomique totale des espèces d'iridium et de tantale dans le catalyseur de réaction de dégagement d'oxygène ; et
du tantale présent en une quantité dans la plage de et y compris 5 à 40 % atomiques en fonction de la composition atomique totale des espèces d'iridium et de tantale dans le catalyseur de réaction de dégagement d'oxygène ; et
dans lequel la phase d'oxyde cristallin comprend une structure d'oxyde monophasique comprenant de l'iridium et du tantale.

2. Procédé de synthèse d'un catalyseur de réaction de dégagement d'oxygène selon la revendication 1, le procédé comprenant les étapes consistant à :
fournir une solution aqueuse de composés d'iridium et de tantale, dans lequel les composés d'iridium et de tantale sont dissous dans la solution aqueuse ;
sécher par atomisation la solution pour former une poudre sèche ; et
soumettre ladite poudre à une calcination à une température inférieure à 500 °C pour former de ce fait le catalyseur de réaction de dégagement d'oxygène ; dans lequel
l'étape consistant à soumettre ladite poudre à une calcination pour former de ce fait le catalyseur de réaction de dégagement d'oxygène comprend les sous-étapes consistant à : soumettre la poudre à une calcination à moins de 500 °C pendant un premier laps de temps spécifié, et ensuite soumettre la poudre à une calcination supplémentaire à moins de 500 °C pendant un second laps de temps spécifié.

3. Procédé selon la revendication 2, dans lequel l'étape de fourniture d'une solution aqueuse de composés d'iridium et de tantale comprend les sous-étapes consistant à :
fournir une solution aqueuse d'un composé d'iridium, et mélanger ladite solution aqueuse avec une solution aqueuse d'un composé de tantale.

4. Couche de catalyseur comprenant le catalyseur de réaction de dégagement d'oxygène selon la revendication 1 et un second matériau électrocatalyseur.

5. Couche de catalyseur selon la revendication 4, dans laquelle la couche de catalyseur est une couche de catalyseur d'anode, facultativement une couche de catalyseur d'anode pour une pile à combustible à membrane échangeuse de protons.

6. Couche de catalyseur selon la revendication 4 ou la revendication 5, dans laquelle le second matériau électrocatalyseur est choisi parmi :
les métaux du groupe du platine (platine, palladium, rhodium, ruthénium, iridium et osmium) ;
de l'or ou de l'argent ;
un métal de base ; ou
un alliage ou mélange comprenant un ou plusieurs de ces métaux ou leurs oxydes.

7. Couche de catalyseur selon l'une quelconque des revendications 4 à 6, dans laquelle le rapport pondéral du catalyseur de réaction de dégagement d'oxygène au second matériau électrocatalyseur dans la couche de catalyseur va de 10:1 à 1:10.

8. Électrode à diffusion de gaz comprenant une couche de diffusion de gaz et une couche de catalyseur selon l'une quelconque des revendications 4 à 7.

9. Membrane catalysée comprenant une membrane conductrice d'ions et une couche de catalyseur selon l'une quelconque des revendications 4 à 7.

10. Ensemble membrane-électrode comprenant une couche de catalyseur selon l'une quelconque des revendications 4 à 7, une électrode à diffusion de gaz selon la revendication 8, ou une membrane catalysée selon la revendication 9.

11. Pile à combustible comprenant une couche de catalyseur selon l'une quelconque des revendications 4 à 7, une électrode à diffusion de gaz selon la revendication 8, une membrane catalysée selon la revendication 9, ou un ensemble membrane-électrode selon la revendication 10.
